# EUROPEAN PATENT APPLICATION

(11) **EP 0 683 223 A2**
(43) Date of publication of application: **22.11.1995**
(21) Application number: 95303173.9
(22) Date of filing: 11.05.1995
(51) Int. Cl.: C12H 1/14, B67D 1/04, B67D 1/12

(54) **Improvements in and relating to beer and other beverages and a method of dispensing beer and other beverages, particularly lager**

(30) Priority: 18.05.1994 GB 9409875; 07.11.1994 GB 9422395; 13.01.1995 GB 9500703
(71) Applicant: Bass Public Limited Company, Burton-on-Trent, Staffordshire DE14 2WB (GB)
(72) Inventor: Price, Stephen Geoffrey, Ashbourne, Derbyshire DE6 5QH (GB); Anderson, Iain Wallace, Burton-on-Trent, Staffordshire (GB)
(74) Representative: Lawrence, John

(57) **Abstract**

A glass of lager 10 which consists, when initially dispensed, of substantially entirely a latent head 27. The latent head is opaque and settles, after a period of time, leaving a clear lager 24 and substantially stable head ontop of the drink. The lager has a high nitrogen content and low carbon dioxide content. The method of dispensing the lager requires that the lager is dispensed at a low temperature, of around 2°C, and uses a pressure drop and small dispense orifices to ensure the production of the latent head.

## Description

This method relates particularly, but not exclusively, to beer and a method of dispensing beer, in particular to the type referred to as lager.

Lager is a very well known drink in the UK. It is served in practically every public house in the country and has had a great increase in consumption over the past 15 years.

Conventionally all lager dispensed by bar-mounted dispensing taps looks the same once it has been dispensed. Some consumers wish to advertise the fact that they have a sophisticated, gourmet, taste for lagers and buy bottled lagers in preference to tap-dispensed lagers at least in part so that they can display the bottle to their friends. Every barman will know that he can receive complaints if he pours all of a bottle of lager into a glass and gives the customer just the glass of lager, which then looks exactly the same as tap-dispensed lager.

According to a first aspect of the invention we provide a glass of just-dispensed lager which is substantially entirely latent head comprising many bubbles suspended or disposed in lager, and having substantially no body of clear lager beneath the latent head.

The latent head is opaque and looks white. The lager so produced has a creamy texture when drunk. This has a different appearance from conventional lagers, and would appeal to some consumers. It will increase the sales of the new lager, compared with those that it would have if it did not have a differentiating appearance, and will therefore mean that the quality of the lager being dispensed is better because there will be less danger of the lager going stale in the barrels or pipelines. Furthermore, an increased level of activity in dispensing a particular lager from a public house will mean that the dispensing equipment will be in better condition since it can be maintained more frequently. Increasing the volume of sales of lager from a particular dispensing tap in the public house is clearly a desirable aim.

It will be appreciated that "a glass of just-dispensed lager" does not apply necessarily just to glasses. Although it is envisaged that lager will usually be dispensed in transparent glasses, the term "glass" is intended to cover any other drinking vessel.

Similarly, although we would usually envisage dispensing the lager from a tap (whether that be hand-pulled or gas pressured) the invention may possibly also be applicable to dispensing lagers in containers such as cans.

The glass of just-dispensed lager which is substantially entirely latent head settles out to form a body of clear lager with a relatively stable head on top of the clear body. This settling out process preferably takes at least 90 seconds to reach the stable condition (initially the foamy, creamy, suspension/dispersion of bubbles in the lager in the glass will be turbulent as the bubbles rise, but it will eventually settle to a relatively still body capped by a relatively stable head). It preferably takes at least 90 seconds to reach the stable condition, and more preferably about 2 or 3 minutes.

It preferably takes at least 30 seconds for half of the glass of latent head to be converted into a body of clear lager, and more preferably at least 45 seconds or 60 seconds, or 90 seconds, or 120 seconds.

According to a second aspect of the invention we provide a beverage having a dissolved nitrogen content of at least 23 milligrammes per litre.

Preferably the nitrogen content is in the range 28 mg/litre ± 5 mg/litre. 28 mg/litre is what we aim at.

The beverage may be lager, but it may be some other beverage, such as beer, ale, or stout.

This is an extremely high nitrogen content and we believe that this results in small bubbles being formed, which means that the bubbles take a long time to rise through the liquid: the pint of lager stays translucent for much longer than conventional lagers.

In some circumstances we may have even lower nitrogen content (for example if there were appropriate nucleation sites and if the carbon dioxide content enabled the initial creamy white appearance to be achieved).

Preferably the nitrogen content is between 23 and 47, or 50 milligrammes per litre, and more preferably between 30 to 40 milligrammes per litre. It may have a nitrogen content of about 35 milligrammes per litre plus or minus 5 milligrammes per litre.

Small bubbles are also far more stable than larger carbon dioxide bubbles which are present in conventional lagers. This means that we can form a more stable head, and have better lacing. Our bubbles may be mainly carbon dioxide, or mainly nitrogen, or any mixture of the two.

According to a third aspect of the invention we provide a beverage having a carbon dioxide content of less than about 3.6 grammes per litre.

We have discovered that this enables the desired effect to be achieved.

The beverage may be lager, or it may be some other beverage such as beer, ale, or stout.

Preferably the carbon dioxide content is in the range 1.45 vols/vol ± 0.1 vols/vol.

Preferably the level of carbon dioxide in the beverage is such that it is below the equilibrium solubility level for the gas in the beverage at the dispensing temperature. Indeed, we believe that another aspect of the invention comprises dispensing a beverage, possibly lager, with a dissolved carbon dioxide gas content that is at a level generally at, or below, equilibrium so that little carbon dioxide gas is evolved from the beverage.

We suspect that the high nitrogen content means that upon the initial pressure drop there are very many very tiny nitrogen bubbles formed in the beverage. These act as nucleation sites for carbon dioxide in the beverage. Even though the carbon dioxide is present at levels below equilibrium, the presence of nucleation sites causes some carbon dioxide to diffuse into the N₂ bubbles. However, this will be a slow process (compared with the prior art where the CO₂ is above equilibruim) and the bubbles will grow slowly, and rise slowly. This is only a theory.

Preferably the carbon dioxide content is between 2.0 and 3.2 grammes per litre.

The carbon dioxide content may be 3.0 grammes per litre.

More preferably the carbon dioxide content is more than 2.6 grammes per litre. We have discovered that a lager does not taste so good if there is less than 2.6 grammes per litre of carbon dioxide.

Contrary to traditional thought, we have found that in lager it is possible to reduce carbon dioxide content below its current levels without removing the "bite" of lager. We have found that if we also reduce the temperature at which the lager is dispensed (preferably to around 2°C) that this compensates for the lack of bite due to carbon dioxide - the cold giving a similar effect.

Reducing the temperature of lager to 2°C also runs against the face of conventional wisdom. It is conventionally thought that cold lagers taste "thin". We have surprisingly found that this effect can be countered by the lower carbon dioxide level. The lower carbon dioxide level appears to increase the frothing of the lager, making the taste fuller. Thus combining two steps which both go against traditional thinking has been discovered to give good results.

The aspects of the invention relating to gas content of the beverage may well apply to other beverages.

According to a fourth aspect of the invention we provide a method of dispensing a glass of beverage, for example lager, comprising ensuring that the beverage is at 2°C plus or minus 3°C when dispensed; ensuring that the beverage has a nitrogen (N₂) content of at least 23 milligrammes per litre; ensuring that the beverage has a carbon dioxide content of 3.6 grammes per litre or less; and dispensing the beverage in such a manner that a large latent head is formed during dispense.

Preferably the beverage is dispensed at 2°C plus or minus 2°C.

Alternatively the beverage may be dispensed at 2°C ±4°C.

Preferably the temperature is about 2°C. The nitrogen content may be about 30 to 40 milligrammes per litre. The carbon dioxide content is preferably about 3 grammes per litre.

Preferably the beverage is dispensed through a restricted orifice having a diameter of less than 4 millimetres, more preferably less than 1 millimetre, and most preferably about 0.6 millimetres or less. There may be a plurality of orifices used to allow a dispense rate which is commercially acceptable. The orifices may each be about 0.9mm in diameter.

This is to cause the glass to be substantially full of the foamy latent head, without much of a clear body beneath the head.

Preferably there is a pressure drop as the beverage (eg lager) is dispensed of at least 30 psi, and most preferably at least 40 psi, and in one preferred embodiment about 50 psi (or 50 psi or above). This too has been found to give a good, creamy turbulent head during the initial stage of settling.

The invention may also be considered to be a method of improving the head on a glass of lager.

Another way of looking at the invention is as method of creating a glass of lager having a differentiated visual appearance from that of conventional glasses of lager, the method comprising dispensing lager which has a nitrogen (N₂) content such that nitrogen bubbles come out of solution upon dispense, and having a carbon dioxide content such that no large amounts of carbon dioxide bubbles come out of solution upon dispense, with the effect that the dispensed lager initially has the appearance of a cream foam matrix in which retains its initial, turbulent, appearance for a substantial time.

It will be appreciated that although we have referred to N₂ as the gas that forms the bubbles, other gases could do so, for example an inert gas such as Argon. "Nitrogen" should be understood to represent any suitable gas that will not react with the beverage and is safe. Similarly, "carbon dioxide" may be another gas. "First gas" and "second gas" may be suitable terms.

The invention applies to all lagers, including low alcohol lagers, and alcohol free lagers, and to other beverages such as beer. We are especially pleased to be able to have a lager with suitable latent head properties. We do not believe that this has been achieved before.

An embodiment of the invention will now be described by way of example only, with reference to the accompanying drawings of which:-
Figure 1 is a schematic view of a dispensing system for displaying lager;
Figure 2 is a representation of a pint of lager immediately after it has dispensed.
Figure 3 is a representation of a pint of lager 3 minutes after it was dispensed;
Figure 4 is a representation of a pint of lager 1 minute after it was dispensed;
Figure 5 is a representation of a pint of lager after 20 minutes after it was dispensed, and after half of it has been drunk;
Figure 6 shows schematically that there is a relationship between the amount of dissolved nitrogen in the lager and the creamy latent head effect; and
Figure 7 shows schematically that there is a relationship between the amount of dissolved carbon dioxide in the lager and the creamy latent head effect.

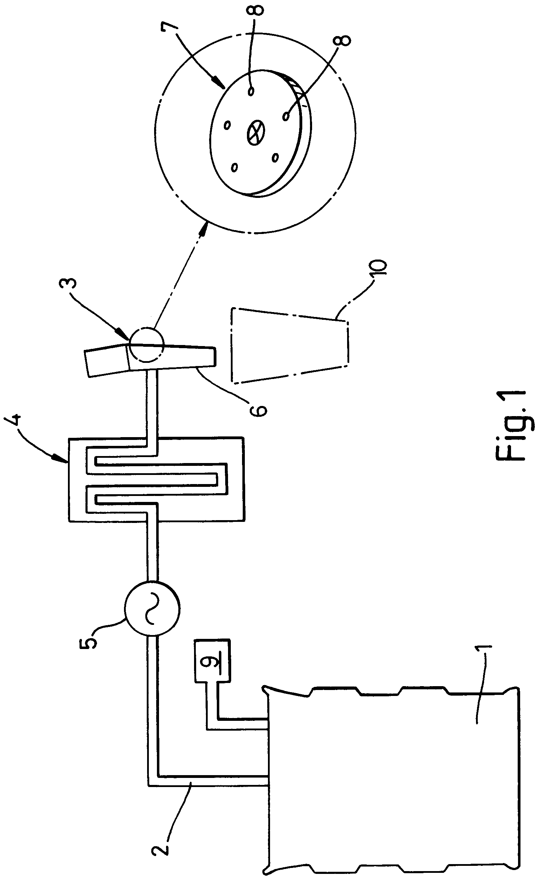

Figure 1 shows schematically a system for dispensing lager at a bar, typical of a public house, comprising a keg of lager, connected by pipework 2 to a dispensing tap 3. The pipework 2 passes through a flash cooler 4. A beer pump 5 may be used to pressurise the lager in the dispense end of the pipework.

The tap 3 has in its nozzle, referenced 6, an orifice plate 7 which has five small holes 8 passing through it. The holes are 0.6mm in diameter and are disposed equi-angularly spaced in a circle.

The lager is stored in the keg in a cellar room, at the temperature of the cellar, but is stored at a pressure of 32 psig (psi above atmosphere). The keg is pressurised by gas applied to it from keg, pressuriser 9. This applies a pressurised gas to the keg. The gas that pressurises the keg is 70% nitrogen and 30 carbon dioxide.

As the lager is extracted from the keg and supplied to the tap 3 it is further pressurised by the beer pump 5 which pressurises the lager being dispensed to 50 psig. The lager is passed through the flash cooler 4 and is dispensed at 2°C. The flash cooler may be situated under the bar or close to the dispense tap.

When the tap is opened the lager is forced through the holes 8 in the orifice plate 7 and released into a glass 10. The action of being forced through the holes 8 with a substantial pressure drop (in this example a 20-50 psig pressure drop) causes nitrogen bubbles to come out of solution and the lager to foam and the glass 10 is filled with a latent head (or proto-head), with substantially no body of clear lager below the creamy, foamy, white head.

As times goes by the head settles out (bubbles eventually rising to the surface of the head leaving clear lager beneath) until eventually a glass of lager having a substantial body of clear lager, topped with a head, is formed.

The head is more stable than those of other lagers. The foaming body of gas bubbles suspended in the liquid lager that is originally formed takes longer to settle than known lagers. It takes of the order of 2 or 3 minutes to settle. Furthermore, no matter how far a barperson lets a stream of lager dispensed from a conventional system fall before it enters a glass, it is not possible to get a glass substantially entirely full of head which then settles out to leave a pint of lager in a pint glass. The present lager and its dispensing system can achieve this because of its gas properties.

The lager has a carbon dioxide content of about 1.5 volume per volume (volume of carbon dioxide at STP per volume of liquid), this is about 3g per litre. This is markedly less than the standard amount of carbon dioxide used in lager.

The lager prior to dispense has a nitrogen content of about 35mg per litre. This is markedly more than the prior art.

Thus the lager dispensed is a high nitrogen, low carbon dioxide lager. The high nitrogen content means that when bubbles form as the nitrogen comes out of the solution as the pressure of the lager is dramatically lowered, the bubbles are small in comparison with the carbon dioxide bubbles which form in conventional dispensed lager.

In a second embodiment we have lager at 2°C with a nitrogen level of 28 mg/litre (possibly ± 5 mg/litre) and a carbon dioxide level of 1.4 vols/vol (possibly between 1.35 vols/vol and 1.55 vols/vol).

In the prior art carbon dioxide is present in the lager in greater amounts, and at levels above equilibrium at the dispense temperature (usually 6°C), so that when the lager is dispensed large carbon dioxide bubbles form. We believe that these strip out any nitrogen that may be in the prior art dispensed lager since the nitrogen diffuses into the carbon dioxide bubbles and is carried away with them. The large carbon dioxide bubbles grow quickly because of the very large amounts of CO₂ coming out of solution and rise quickly, and there is a body of transparent lager in the glass immediately, or substantially immediately.

Because the level of dissolved carbon dioxide is so low in the present invention (usually, and perhaps necessarily below the equilibrium level) the carbon dioxide does not rush straight into the many tiny nitrogen bubbles. The carbon dioxide does, it is believed, come out of solution despite being below the equilibrium level, because of the presence of so many nucleation sites, but the nitrogen bubbles grow only slowly, and so take longer to rise through the liquid, so the glass stays full a of creamy, foamy, mass for longer. Furthermore, because the bubbles are smaller they are more stable and the head is more stable: it lasts longer.

In the present embodiment there is carbon dioxide present in the dispensed lager, but at a far lower level and at a level that is below equilibrium at the new dispense temperature, so that carbon dioxide does not come out of solution to form large carbon dioxide bubbles upon dispense (or at least in not the same volumes). Thus the smaller nitrogen bubbles are not immediately swollen and swept away by a stream of carbon dioxide.

This teaching may be applied to beverages other than lager, for example beer.

It might be thought that having a carbon dioxide content of a low as 3g per litre would make the lager taste flat, and would take the "bite" out of the lager. This is clearly unacceptable since the initial bite of lager is a major factor in its taste, and in its appeal to its drinkers. However we have overcome the prejudice against lowering the carbon dioxide content. We have realised that if we also lower the temperature, the temperature can give a similar initial "bite" to the drinker.

Furthermore, a very cold lager, as any drinker will know, tastes "thin": it does not have much taste. We have overcome the prejudice against serving very cold lager ( 2°C or so). We have found that lowering the carbon dioxide content alters the palate of the lager and makes it fuller, giving a greater flavour delivery.

Thus although lowering carbon dioxide, and lowering the temperature, of lager are both generally thought to be bad things we have found that if both are lowered the lager tastes good (when it might have been expected to taste bad). Our new lager has an improved taste.

A further advantage of our lager is that because it has less carbon dioxide, and less gas in total in it, than a conventional dispensed lager, it is easier to drink in volume. It does not fill the stomach of the drinker with gas. The drinker may therefore feel more comfortable after drinking the same volume of lager (compared with prior art lager).

Our dispensed lager has an appeal to the drinker because it is new. It is well known that some drinkers will be attracted to a new and distinctive drink. The fact that this is the first lager to have a creamy/foamy delivery increases its commercial prospects of success, and makes it a better lager. Equally, the fact that it has a more stable head is a technical advance in the field of lagers. We might expect some beer drinkers who like a head to try our new lager because it has a "proper" head. Our new lager also has better lacing than a typical lager.

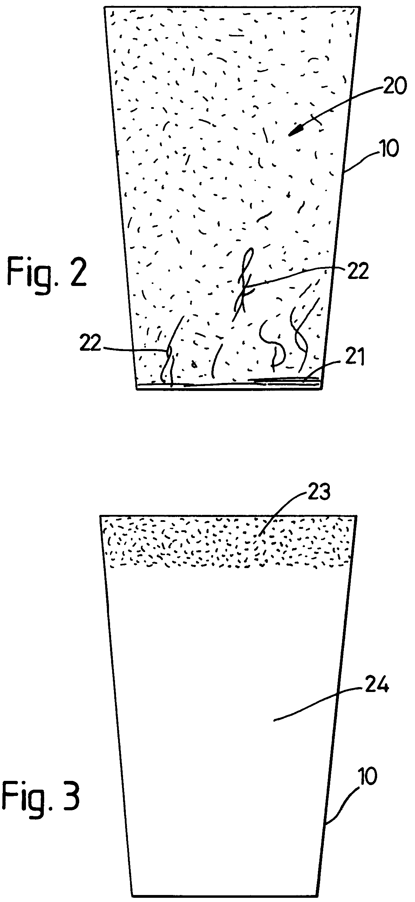

Referring now to Figures 2 to 5, Figure 2 shows a pint of lager in accordance with the invention just after it has been dispensed. It is substantially entirely head (referenced 20). There may be a small layer of liquid lager 21 at the bottom of the glass. There are swirls 22 of rising bubbles towards the bottom of the glass.

Figure 3 shows the pint of Figure 2 after 3 minutes (or perhaps after 2 minutes, or 4 minutes), when the suspension or dispersion of nitrogen bubbles has cleared, with the bubbles rising to form a stable top head 23 with a clear body 24 of lager beneath it. It will usually take at least 1½ minutes, and may take about 3 minutes for this to be achieved.

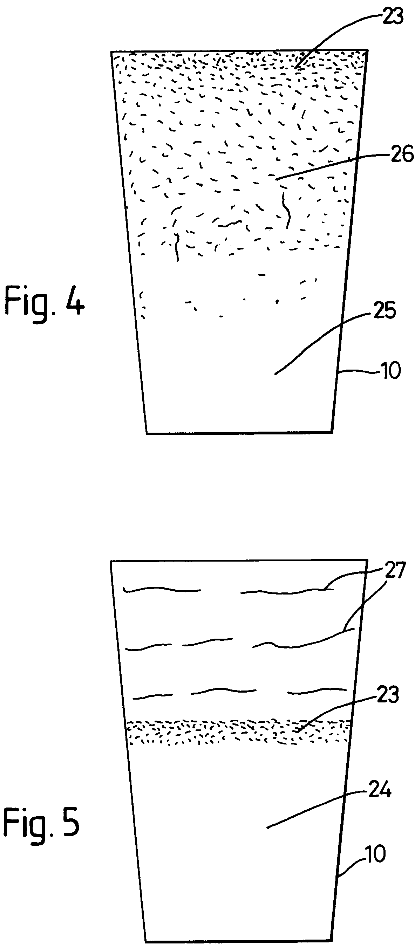

Figure 4 shows the glass of lager of Figure 1 part way through its standing process. The lower part of the glass has substantially clear lager, referenced 25, and the upper part has a suspension of small nitrogen bubbles which are still rising and define a turbulent region 26. A more stable head, head 23, is beginning to form. Figure 4 represents a glass of lager at, say, 1 minute after dispense.

Figure 5 illustrates the stability of the head 23, and the improved lacing of the lager. It shows a glass of lager 20 minutes after dispense. The lacing marks around the sides of the glass are referenced as 27.

When a glass of lager is poured, with the tap a few centimetres from the lip of the glass (for example 5cm), the head fills the glass substantially to the lip of the glass. When the pint of lager has settled out, and the clear body has developed, the top of the head is in substantially the same place relative to the glass: it is still substantially at the top of the glass (this is in comparison with prior art lagers where if a large foam head is created, by pouring from a height, the head collapses from the top, and ends up several centimetres lower than its maximum height - the settled glass is not full). The settled head of the present invention is formed from the turbulent foamy creamy mass from its bottom and does not collapse down significantly in an initial timescale (at least five minutes).

Furthermore, the settled head of one embodiment of the present invention, when formed, is stable enough to make marks in it which can be seen for a time (for example a line can be tracted in it with a finger and the line can still be seen after two or three minutes).

It will be appreciated that the size of the bubbles formed in the latent head, and the rate that they grow, influence the life of the latent head, and their final size also influences the final head stability.

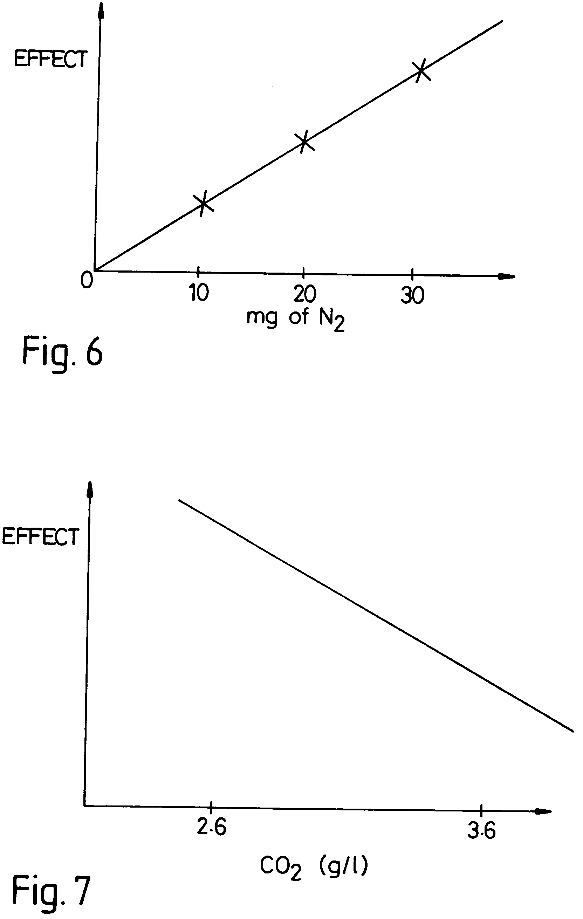

Figure 6 shows that the more nitrogen bubbles there are in the lager the better the effect of the opaque white creamy latent head. This is believed to be because when there are more small nitrogen bubbles and the carbon dioxide that comes out of solution is spread out over more bubbles and so individual bubbles stay smaller for longer, and so do not rise so quickly.

Figure 7 shows that the less carbon dioxide there is (so long as there is enough to form a head), the better the effect. This is believed to be because less carbon dioxide comes out of solution to swell the very small nitrogen bubbles.

It is also believed that a larger pressure drop upon dispense produces smaller bubbles, and hence a longer-lasting latent head.

The orifice plate creates nucleation sites during dispense. Other nucleation site creating means may be provided instead, or in addition.

It will be appreciated that the temperature of the lager influences the equilibrium amount of dissolved carbon dioxide. The colder the lager, the more CO₂ we can use and still get the same effect. Thus if we were to use lager at -1°C we may be able to have more than 3.6 g/l carbon dioxide.

As a modification of the disclosure of this application we may prefer to dispense lager (or other beverage) from a device having an orifice plate having four holes each of 0.9mm diameter.

The alcohol level of the lager is preferably 4.5%, or in a alternative embodiment 4.7%, abv.

The lager may settle out to form a clear body of liquid with a distinct head above it in about 90 seconds from pouring it. For example, if we were to use a 24 oz glass then 24 oz of latent head would form, say, 95% of a pint of liquid with a head on top.

We may prefer to have the gas that pressurises the beverage at about 18 psig. The top pressure gas may be a mixture of carbon dioxide and nitrogen at a ratio of 60/40.

We have found that a ratio of 60/40 carbon dioxide/nitrogen ratio of top pressure gas at 18 psig results in a relatively low rate of change of the dissolved gas content of the beverage during storage. This avoids significant amounts of N₂ or CO₂ coming out of solution whilst the beverage is in its keg, waiting to be disposed. There is therefore a more uniform dissolved gas content of the beverage over time.

References to "nitrogen" should be taken, from the point of view of the protection we desire, to encompass other inert gases which can be used to achieve the same effect (and which are not carbon dioxide). For example, a noble gas, eg helium or neon might conceivably be tried, but of course we prefer to use nitrogen.

It will be appreciated that the gas content values discussed above are intended primarily for a keg product. Of course, we might provide a canned or bottle (small pack) product with similar gas content.

We will, of course, aim to dispense our lager at 2°C all of the time (ie the refrigeration system is good enough to maintain this temperature over a working session of the dispense tap).

In experimental trials we have found that a beverage with a carbon dioxide level of 1.35 vol/v to 1.55 vols/vol is especially good. At lower carbon dioxide levels the beverage tastes flat (at 2°C). At higher carbon dioxide levels we experience severe problems dispensing the beverage without uncontrollable fob, especially if the temperature rises. 2°C is the best temperature we have found, but acceptable results have been achieved at 2°C ± 2°C.

## Claims

1. A beverage, preferably lager, beer, ale, stout, porter, or the like, characterised in that it has a nitrogen gas content of at least 23 mg per litre.

2. A beverage according to claim 1 characterised in that it has a nitrogen gas content of 23 to 50 mg per litre, or preferably about 30 to 40 mg per litre.

3. A beverage according to claim 2 that has a nitrogen gas content of 28 ± 5 mg per litre.

4. A beverage according to any preceding claim characterised in that it has a carbon dioxide gas content of 1.8 volume per volume or less (3.6 g/l or less).

5. A beverage according to claim 4 which has a carbon dioxide content of 1.0 to 1.6 volume per volume ( 2.0 to 3.2 g/l), and preferably about 1.4 or 1.5 volume per volume (3 g/l).

6. A beverage according to any one of claims 1 to 9 characterised in that it is at a temperature of 2°C plus or minus 4°C, or preferably ±3°C, or ±2°C when it is dispensed.

7. A glass of just-dispensed beer, for example lager, which is substantially entirely latent head (20) comprising many bubbles suspended or dispersed in lager, and having substantially no body of clear lager beneath the head, and in which the beer is in accordance with any preceding claim.

8. A glass of beer according to claim 7 which is dispensed from a tap (3).

9. A glass of beer according to claim 7 or claim 8 in which the latent head (20) settles out to form a body of clear beer with a relatively stable head on it, the volume of the body plus head being generally the same as the volume of latent head from which they are formed.

10. A glass of lager according to claim 9 which is still at least substantially half full of latent head 30 seconds, or 45 seconds, or 60 seconds, or 90 seconds, or 120 second after having been dispensed.

11. A method of dispensing a glass of beverage comprising ensuring that the beverage has a nitrogen (N₂) content of at least 23mg/litre

12. A method according to claim 11 characterised in that the beverage has a carbon dioxide content of 3.6 g/litre or less, and is dispensed at 2°C (±3°C), the method further comprising ensuring that the beverage is dispensed in such a manner that a large latent head is formed during dispense.

13. A method according to claim 11 or claim 12 in which the beverage is pressurised by a top pressure gas, the gas that pressurises the beverage being at about 18 psig.

14. A method according to claim 13 in which the top pressure gas is a mixture of carbon dioxide and nitrogen at a ratio of about 60/40.
